# EUROPEAN PATENT APPLICATION

(11) **EP 4 831 932 A1**
(43) Date of publication of application: **28.10.2026**
(21) Application number: 24906155.7
(22) Date of filing: 09.12.2024
(51) Int. Cl.: G06V 10/764, G06V 10/82, G06N 3/0464

(54) **OBJECT DETECTION METHOD AND APPARATUS**

(30) Priority: 19.12.2023 CN 202311747933
(71) Applicant: Beijing Jingdong Yuansheng Technology Co., Ltd., Beijing 100176 (CN)
(72) Inventor: YAO, Zhuokun, Beijing 100176 (CN)
(74) Representative: Böckmann genannt Dallmeyer, Georg Nikolas
(86) International application number: PCT/CN2024/137703
(87) International publication number: WO 2025/130671

(57) **Abstract**

The present application relates to the technical field of artificial intelligence, and discloses an object detection method and apparatus. A specific embodiment of the method comprises: performing feature extraction on an input image to obtain a feature matrix, and flattening the feature matrix in a planar dimension to obtain a Key and Value vector set; performing first score evaluation on the Key and Value vector set, and extracting a candidate Key and Value vector set from the Key and Value vector set based on a first score evaluation result; performing second score evaluation on a pre-generated Query vector set, and extracting a target Query vector set from the Query vector set based on a second score evaluation result; and executing attention mechanism calculation based on the candidate Key and Value vector set and the target Query vector set to obtain an object detection result. According to the embodiment, the amount of attention mechanism calculation is remarkably reduced and the calculation speed is increased, without decreasing the feature resolution and reducing effective features, thereby achieving the effect of performing object detection in real time at a vehicle end.

## Description

### CROSS-REFERENCE TO RELATED APPLICATIONS

This application claims the priority to Chinese patent application No. 202311747933.2, filed on December 19, 2023, and entitled "OBJECT DETECTION METHOD AND APPARATUS". The entire content disclosed in the aforementioned Chinese patent application is hereby incorporated by reference as part of or the entire content of this application.

### TECHNICAL FIELD

The present disclosure relates to the field of artificial intelligence technology, and in particular, to an object detection method and apparatus.

### BACKGROUND

Pure vision-based 3D object detection methods extract features from input image information through models and ultimately output 3D detection results of target objects in the scene. In recent years, with the development of Transformer models, which are sequence models based on attention mechanisms, more and more methods have applied attention mechanisms to 3D object detection. Although attention mechanisms can effectively extract global features, the calculation complexity thereof is often significantly higher than that of conventional Convolutional Neural Network (CNN), making it difficult to achieve fast calculation speed in scenarios such as autonomous driving that requires real time calculation at a vehicle end.

In the process of implementing the present disclosure, the inventors found that the prior art has at least the following problems: existing object detection methods based on attention mechanisms have high calculation complexity and slow calculation speed, making it difficult to achieve real time object detection.

### SUMMARY

In view of the above, embodiments of the present disclosure provide an object detection method and apparatus. By performing quality score evaluation on the QKV vectors of the attention mechanism and then selecting some QKV vectors carrying the most effective information based on a dynamic screening strategy for the number of QKV vectors, the amount of attention mechanism calculation is significantly reduced and the calculation speed is increased without decreasing the feature resolution and reducing effective features, thereby achieving the effect of performing object detection in real time at a vehicle end.

To achieve the above object, according to one aspect of the embodiments of the present disclosure, an object detection method is provided, comprising:
performing feature extraction on an input image to obtain a feature matrix, and flattening the feature matrix in a planar dimension to obtain a Key and Value vector set;
performing first score evaluation on the Key and Value vector set, and extracting a candidate Key and Value vector set from the Key and Value vector set based on a first score evaluation result;
performing second score evaluation on a pre-generated Query vector set, and extracting a target Query vector set from the Query vector set based on a second score evaluation result;
executing attention mechanism calculation based on the candidate Key and Value vector set and the target Query vector set to obtain an object detection result.

According to one or more embodiments of the present disclosure, performing first score evaluation on the Key and Value vector set and extracting a candidate Key and Value vector set from the Key and Value vector set based on the first score evaluation result comprise: obtaining a Key and Value vector evaluation graph by introducing an additional model branch, and performing first score evaluation on the Key and Value vector set using the Key and Value vector evaluation graph; sorting the Key and Value vectors in the Key and Value vector set from high score to low score based on the first score evaluation result; selecting the top first specified number of Key and Value vectors from a sorted Key and Value vector set to obtain the candidate Key and Value vector set.

According to one or more embodiments of the present disclosure, the method further comprises: supervising the Key and Value vector evaluation graph using a classification loss function supervision signal based on binary cross entropy.

According to one or more embodiments of the present disclosure, performing second score evaluation on the pre-generated Query vector set and extracting the target Query vector set from the Query vector set based on the second score evaluation result comprise: obtaining a Query vector evaluation vector by introducing an additional model branch, and performing the second score evaluation on the pre-generated Query vector set using the Query vector evaluation vector; sorting the Query vectors in the Query vector set from high score to low score based on the second score evaluation result; selecting the top second specified number of Query vectors from a sorted Query vector set to obtain the target Query vector set.

According to one or more embodiments of the present disclosure, the method further comprises: supervising the Query vector evaluation vector using a loss function based on mean absolute error.

According to one or more embodiments of the present disclosure, the additional model branch is implemented based on a convolutional neural network.

According to another aspect of the embodiments of the present disclosure, an object detection apparatus is provided, comprising:
an image feature extraction module, configured to perform feature extraction on an input image to obtain a feature matrix, and flatten the feature matrix in a planar dimension to obtain a Key and Value vector set;
a first vector extraction module, configured to perform first score evaluation on the Key and Value vector set, and extract a candidate Key and Value vector set from the Key and Value vector set based on a first score evaluation result;
a second vector extraction module, configured to perform second score evaluation on a pre-generated Query vector set, and extract a target Query vector set from the Query vector set based on a second score evaluation result;
an attention mechanism calculation module, configured to execute attention mechanism calculation based on the candidate Key and Value vector set and the target Query vector set to obtain an object detection result.

According to one or more embodiments of the present disclosure, the first vector extraction module is further configured to: obtain a Key and Value vector evaluation graph by introducing an additional model branch, and perform the first score evaluation on the Key and Value vector set using the Key and Value vector evaluation graph; sort the Key and Value vectors in the Key and Value vector set from high score to low score based on the first score evaluation result; select the top first specified number of Key and Value vectors from a sorted Key and Value vector set to obtain the candidate Key and Value vector set.

According to one or more embodiments of the present disclosure, the second vector extraction module is further configured to: obtain a Query vector evaluation vector by introducing an additional model branch, and perform the second score evaluation on the pre-generated Query vector set using the Query vector evaluation vector; sort the Query vectors in the Query vector set from high score to low score based on the second score evaluation result; select the top second specified number of Query vectors from a sorted Query vector set to obtain the target Query vector set.

According to yet another aspect of the embodiments of the present disclosure, an electronic device is provided, comprising: one or more processors; a storage device configured to store one or more programs, which when executed by the one or more processors, cause the one or more processors to perform the object detection method provided by the embodiments of the present disclosure.

According to yet another aspect of the embodiments of the present disclosure, a computer-readable medium is provided, on which a computer program is stored, which when executed by a processor, causes the processor to perform the object detection method provided by the embodiments of the present disclosure.

The further effects of the non-conventional optional manners described above will be described below in conjunction with specific implementations.

### BRIEF DESCRIPTION OF DRAWINGS

The accompanying drawings are provided for a better understanding of the present disclosure and do not constitute an improper limitation thereof. In the drawings:
FIG. 1 is a schematic diagram of the implementation principle of existing object detection based on an attention mechanism;
FIG. 2 is a schematic diagram of the implementation principle of object detection based on attention mechanism according to an embodiment of the present disclosure;
FIG. 3 is a schematic diagram of main steps of an object detection method according to an embodiment of the present disclosure;
FIG. 4 is a schematic diagram of main modules of an object detection apparatus according to an embodiment of the present disclosure;
FIG. 5 is an exemplary system architecture diagram in which embodiments of the present disclosure can be applied;
FIG. 6 is a schematic structural diagram of a computer system suitable for implementing a terminal device or server according to embodiments of the present disclosure.

### DETAILED DESCRIPTION

Exemplary embodiments of the present disclosure will be described below with reference to the accompanying drawings, including various details of the embodiments of the present disclosure to facilitate understanding, which should be regarded as exemplary only. Therefore, those of ordinary skill in the art will appreciate that various changes and modifications can be made to the embodiments described herein without departing from the scope and spirit of the present disclosure. Similarly, for the sake of clarity and conciseness, descriptions of well-known functions and structures are omitted in the following description.

It should be noted that in the technical solutions disclosed in this application, the collecting, gathering, updating, analysis, processing, use, transmission, storage, etc., of user personal information involved all comply with relevant laws and regulations, are used for legitimate purposes, and do not violate public order and good customs. Necessary measures are taken for user personal information to prevent unauthorized access to user personal information data and to maintain user personal information security, network security, and national security.

The amount of attention mechanism calculation is proportional to the lengths of three weight matrices: Query vector (hereinafter referred to as Q), Key vector (hereinafter referred to as K), and Value vector (hereinafter referred to as V). Therefore, to accelerate models based on the attention mechanism, it is necessary to reduce the lengths of QKV, thereby multiplying the calculation speed. However, the reduction in QKV length (i.e., the reduction in vector dimensions) often means a decrease in feature resolution and loss of feature information, which is very likely to lead to a decline in model performance.

To solve this problem, the present disclosure proposes a dynamic screening strategy for QKV of the attention mechanism. On the premise of not decreasing feature resolution and not reducing effective features, the length of QKV is remarkably reduced, the calculation amount is reduced, and the significant improvement of model calculation speed is achieved without loss of accuracy (or even improving accuracy), thereby achieving the effect of performing object detection in real time at the vehicle end..

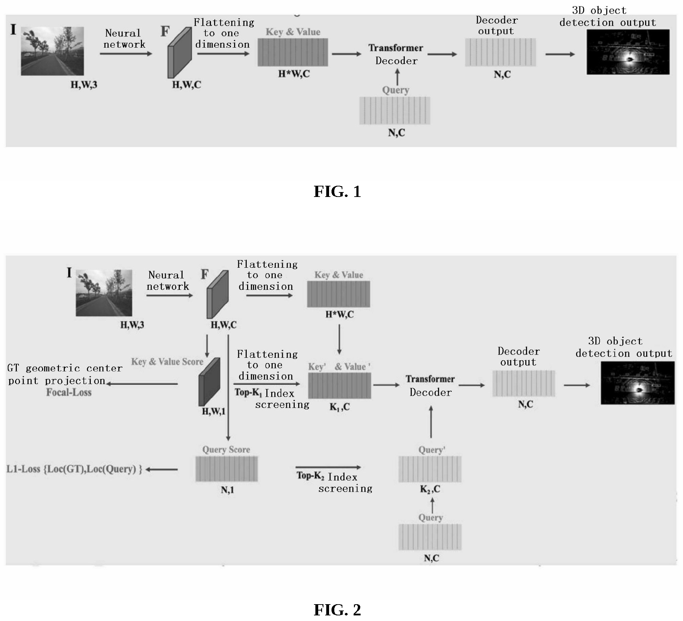

FIG. 1 is a schematic diagram of the implementation principle of existing object detection based on an attention mechanism. As shown in FIG.1, in the prior art, an input image first extracts features through a conventional Convolutional Neural Network (CNN) to obtain a feature matrix F. The height of F is H, the width is W, and the number of channels is C. F is flattened in the planar dimension to obtain H*W feature vectors of dimension C, which serve as the K and V of the attention mechanism, and the length of KV is H*W. At the same time, the length of the pre-generated Query vector set Q is N. Q and KV are input together into the decoder of the Transformer, a sequence model based on the attention mechanism, to perform the calculation of the attention mechanism and obtain the output of the decoder. The decoder output is then passed through the subsequent neural network to obtain the final object detection result. In this process, the length H*W of KV and the length N of Q remarkably affect the amount of attention mechanism calculation, making it difficult to achieve fast calculation speed. To accelerate the calculation of attention mechanism, an embodiment of the present disclosure proposes a dynamic screening strategy for KVQ. By introducing additional model branches, KV and Q are evaluated respectively to achieve dynamic screening of KV and Q, so as to screen out QKV vectors carrying the most effective information, significantly reducing the amount of attention mechanism calculation, improving the calculation speed, and achieving object detection in real time at the vehicle end.

FIG.2 is a schematic diagram of the implementation principle of object detection based on attention mechanism according to an embodiment of the present disclosure. As shown in FIG. 2, in the embodiment of the present disclosure, the input image first adopt the same method as the prior art to obtain the original vector set KV with a length of H*W. Specifically, the input image extracts features through a conventional Convolutional Neural Network (CNN) to obtain a feature matrix F. The height of F is H, the width is W, and the number of channels is C. F is flattened in the planar dimension to obtain H*W feature vectors with dimension C, which serve as the K and V of the attention mechanism. The length of KV is H*W.

Simultaneously, the object detection model of the present disclosure introduces an additional branch to obtain a matrix KV evaluation graph (Key & Value Score) for performing score evaluation on KV.

The number of elements in this KV evaluation graph is the same as the length of the original KV vector set, both being H*W, and the value of each element represents the score of effective information carried by the K/V at the corresponding position. The higher the score, the richer the information and the more valuable it is. In all original KV vector sets, a considerable number of positions correspond to invalid (or low-efficiency) regions in the input image, such as the sky. These regions contribute very little to the final object detection but bring substantial calculation amount. The lower the score at a position in the KV evaluation graph, the more likely it is the above-mentioned invalid (or low-efficiency) region. To allow only a few high-efficiency regions to participate in the calculation, TOP K1 screening is performed on the KV evaluation graph, that is, the top K1 regions with the highest scores are screened out (for example, if K1=100, the top 100 regions with the highest scores are screened out). Specifically, in the model of the present disclosure, the value of K1 is, for example, H*W/4, that is, the number of KV vector sets is reduced to 1/4 of the original. After obtaining the index positions of the TOP K1 scores, only the elements corresponding to the TOP K1 index positions of the original KV vector set are retained, obtaining the screened K' V' vector set with a length of K1. In this screening process, the feature resolution is not decreased. Instead, by evaluating the quality of KV, only the "foreground" regions with key features are retained and the background regions are removed. Therefore, the information loss is extremely small and does not cause a decrease in model accuracy. Even, this way will make the model focus more on valuable key foreground regions (e.g., roads) and ignore background regions that may cause interference (e.g., the sky), which will instead improve the model accuracy during actual training, and at the same time significantly reduce the number of KV and improve the calculation speed.

Similarly to the screening of the KV vector set, the object detection model of the present disclosure introduces an additional branch to obtain a Q evaluation vector (Query Score) with length N for scoring Q. The number of elements of the vector is the same as the length of the original Query vector set Q, and the score at each position is an evaluation of the quality of each Q vector. Similarly, TOP K2 index screening is performed on the Q evaluation vector (K2 is specifically set to 0.5N in this embodiment, that is, the number of Q vector sets is reduced by half), and only the TOP K2 index positions of the original Q vector set are retained, obtaining the dynamically screened Query vector set Q' with a length of K2.

Ultimately, the K'V' vector set with a length of K1 and the Q' vector with a length of K2 enter the decoder of the Transformer to perform the attention mechanism calculation, and finally output the object detection result. Since K1 is only 1/4 of H*W and K2 is only 1/2 of N, the calculation speed of the attention mechanism will be significantly increased without causing a decrease in model accuracy, achieving object detection in real time at the vehicle end.

Moreover, to ensure the prediction accuracy of the object detection model, the KV evaluation graph and the Q evaluation vector need to be able to objectively, fairly and accurately provide quality scores for QKV at each index position. To this end, additional loss functions need to be introduced to supervise both. First, for the KV evaluation graph, a classification loss function supervision signal based on Focal loss (Focal loss is a classification loss function based on binary cross-entropy) is adopted. For producing ground truth supervision signal, the present disclosure projects the geometric center point of the target object into the image, sets 1 at the corresponding position in the ground truth graph, and assigns a floating-point score ground truth that decays to 0 within a certain Gaussian radius. In this way, the ground truth KV evaluation graph has a significant physical meaning, that is, the closer a pixel is to the center point of the target object, the higher the quality score it generates. Using this signal to supervise the predicted KV evaluation graph can ensure that it can objectively and fairly provide the quality score for each KV. For the Q evaluation vector, since the Query vector in object detection is usually bound to the three-dimensional position coordinates (x, y, z) of the object, it can be supervised based on a conventional L1-Loss (mean absolute error) loss function, and the Query vector closer to the ground truth target object has a higher score.

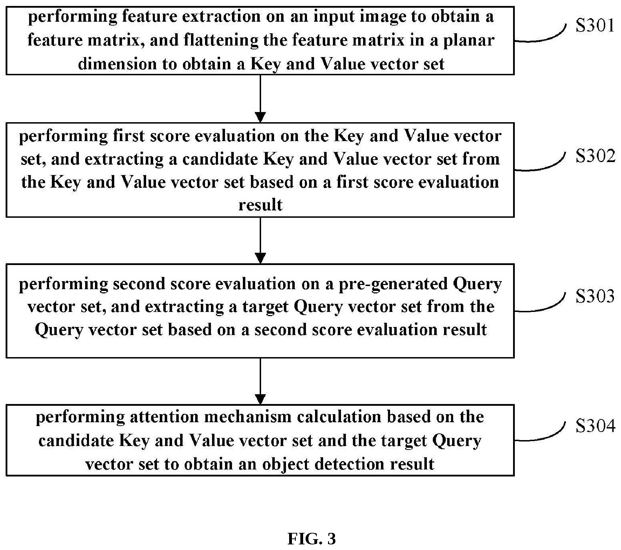

FIG. 3 is a schematic diagram of main steps of an object detection method according to an embodiment of the present disclosure. As shown in FIG. 3, the object detection method according to the embodiment of the present disclosure mainly comprises the following steps S301 to S304.

Step S301: Perform feature extraction on an input image to obtain a feature matrix, and flatten the feature matrix in a planar dimension to obtain a Key and Value vector set. In one embodiment of the present disclosure, feature extraction is performed on the input image through a conventional Convolutional Neural Network (CNN) to obtain a feature matrix F. The height of F is H, the width is W, and the number of channels is C. F is flattened in the planar dimension to obtain H*W feature vectors with dimension C, which serve as the Key vector K and Value vector V of the attention mechanism. The Key and Value vector set KV composed of K and V has a length of H*W.

Step S302: Perform first score evaluation on the Key and Value vector set, and extract a candidate Key and Value vector set from the Key and Value vector set based on the first score evaluation result.

According to an embodiment of the present disclosure, performing first score evaluation on the Key and Value vector set and extracting a candidate Key and Value vector set from the Key and Value vector set based on the first score evaluation result may specifically include: obtaining a Key and Value vector evaluation graph by introducing an additional model branch, and using the Key and Value vector evaluation graph to perform first score evaluation on the Key and Value vector set; sorting the Key and Value vectors in the Key and Value vector set from high score to low score based on the first score evaluation result; selecting the top first specified number of Key and Value vectors from a sorted Key and Value vector set to obtain the candidate Key and Value vector set. In the embodiment of the present disclosure, the additional model branch is implemented based on a convolutional neural network. Perform the first score evaluation on the Key and Value vector set using the Key and Value vector evaluation graph is, for example, performing convolution operation on the Key and Value vector set via the convolutional neural network to perform the first score evaluation. In the specific implementation process, when sorting the Key and Value vectors in the Key and Value vector set from high score to low score based on the first score evaluation result, for example, sorting is performed according to the index position of each Key and Value vectors in the Key and Value vector set. Subsequently, when selecting the top first specified number of Key and Value vectors, the top first specified number of index positions may also be selected, and the corresponding Key and Value vectors can be obtained according to the selected index positions. The first specified number can be flexibly set according to the needs of the business scenario.

By selecting candidate Key and Value vectors from the Key and Value vector set based on the scores of the Key and Value vectors, only the "foreground" regions with key features in the input image are retained, while the background regions are removed. Therefore, the amount of information loss is extremely small and does not cause a decrease in model accuracy. Even, this way will make the model focus more on valuable key foreground regions (e.g., roads) and ignore background regions that may cause interference (e.g., the sky), which will instead improve the model accuracy during actual training, and at the same time significantly reduce the number of Key and Value vector set KV and improve the calculation speed.

Step S303: Perform second score evaluation on the pre-generated Query vector set, and extract a target Query vector set from the Query vector set based on a second score evaluation result.

According to yet another embodiment of the present disclosure, performing second score evaluation on the pre-generated Query vector set and extracting the target Query vector set from the Query vector set based on the second score evaluation result may specifically include: obtaining a Query vector evaluation vector by introducing an additional model branch, and using the Query vector evaluation vector to perform the second score evaluation on the pre-generated Query vector set; sorting the Query vectors in the Query vector set from high score to low score based on the second score evaluation result; selecting the top second specified number of Query vectors from a sorted Query vector set to obtain the target Query vector set. In the embodiment of the present disclosure, the additional model branch is implemented based on a convolutional neural network. Using the Query vector evaluation vector to perform the second score evaluation on the Query vector set is, for example, performing convolution operation on the Query vector set via the convolutional neural network to perform the second score evaluation. In the specific implementation process, when sorting the Query vectors in the Query vector set from high score to low score based on the second score evaluation result, for example, sorting is performed based on the index position of each Query vector in the Query vector set. Subsequently, when selecting the top second specified number of Query vectors, the top second specified number of index positions may also be selected, and the corresponding Query vectors may be obtained based on the selected index positions. The second specified number can be flexibly set according to the needs of the business scenario.

By selecting target Query vectors from the Query vector set based on the scores of the Query vectors, only the Query vectors Q with higher query information scores are retained. Therefore, the amount of information loss is extremely small and does not cause a decrease in model accuracy. Even, this way will make the model focus more on valuable query information, which will instead improve model accuracy during actual training, and at the same time significantly reduce the number of Query vector set Q and improve the calculation speed.

Step S304: Perform attention mechanism calculation based on the candidate Key and Value vector set and the target Query vector set to obtain an object detection result. In the embodiment of the present disclosure, since the lengths of KVQ input into the model have been reduced, the calculation speed of the attention mechanism will be significantly improved without causing a decrease in model accuracy, thereby achieving object detection in real time at the vehicle end.

According to an embodiment of the present disclosure, the Key and Value vector evaluation graph is supervised using a classification loss function supervision signal based on binary cross-entropy, and the Query vector evaluation vector is supervised using a loss function based on mean absolute error. To ensure the model prediction accuracy and enable the KV evaluation graph and Q evaluation vector to objectively, fairly and accurately provide the quality scores for QKV at each index position, additional loss functions are introduced in the embodiments of the present disclosure to supervise the KV evaluation graph and Q evaluation vector.

For the KV evaluation graph, a classification loss function supervision signal based on Focal loss is used. For producing the ground truth supervision signal, the geometric center point of the target object (when calculating the loss function, the truly existing objects need to be manually labeled, and the target objects are these labelled ground truth objects) is projected into the image and set 1 at the corresponding position in the ground truth graph, and a floating-point score ground truth that decays to 0 within a certain Gaussian radius is assigned. In this way, the ground truth KV evaluation graph has a significant physical meaning, that is, the closer the pixel is to the center point of the target object, the higher the quality score. Using this signal to supervise the predicted KV evaluation graph can ensure that it can objectively and fairly provide the quality score for each KV vector. For the Q evaluation vector, since the query vector in object detection is typically bound to the three-dimensional position coordinates (x, y, z), it can be supervised based on the conventional L1-Loss, and the Query vector closer to the ground truth target object has a higher score.

By designing and introducing additional model branches, the KV evaluation graph and Q evaluation vector of the attention mechanism are obtained to accurately describe the quality scores of QKV vectors. By screening them, the QKV vectors with the highest scores and carrying the most effective information are obtained, which significantly reduces the amount of attention mechanism calculation, improves the calculation speed, enhances the model prediction accuracy, and achieves the effect of object detection in real time at the vehicle end.

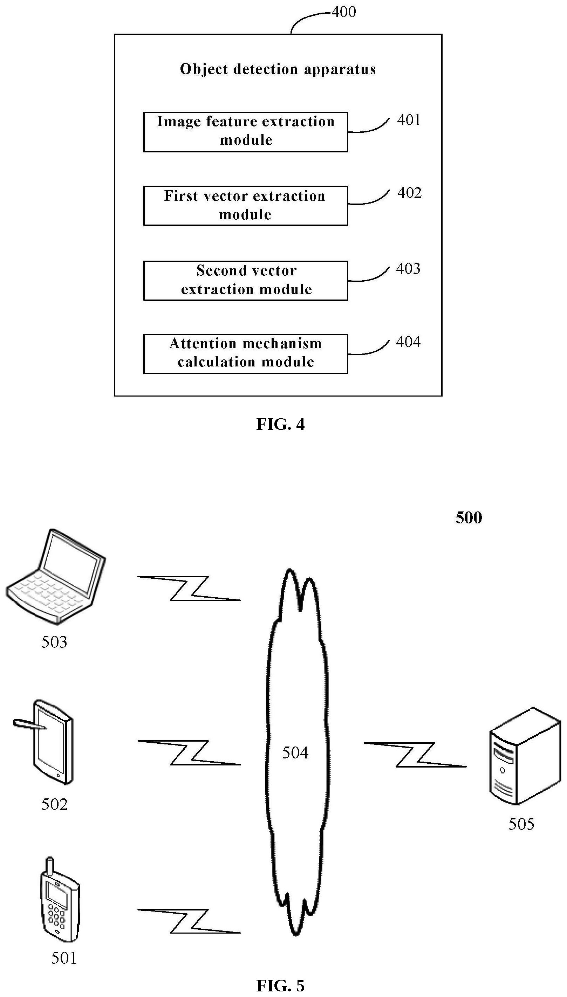

FIG. 4 is a schematic diagram of the main modules of an object detection apparatus according to an embodiment of the present disclosure. As shown in FIG. 4, the object detection apparatus 400 according to the embodiment of the present disclosure mainly comprises an image feature extraction module 401, a first vector extraction module 402, a second vector extraction module 403, and an attention mechanism calculation module 404.

The image feature extraction module 401 is configured to perform feature extraction on an input image to obtain a feature matrix, and flatten the feature matrix in a planar dimension to obtain a Key and Value vector set;
The first vector extraction module 402 is configured to perform first score evaluation on the Key and Value vector set and extract a candidate Key and Value vector set from the Key and Value vector set based on the first score evaluation result;
The second vector extraction module 403 is configured to perform second score evaluation on a pre-generated Query vector set and extract a target Query vector set from the Query vector set based on the second score evaluation result;
The attention mechanism calculation module 404 is configured to perform attention mechanism calculation based on the candidate Key and Value vector set and the target Query vector set to obtain an object detection result.

According to an embodiment of the present disclosure, the first vector extraction module 402 may be further configured to: obtain a Key and Value vector evaluation graph by introducing an additional model branch, and perform the first score evaluation on the Key and Value vector set using the Key and Value vector evaluation graph; sort the Key and Value vectors in the Key and Value vector set from high score to low score based on the first score evaluation result; select the top first specified number of Key and Value vectors from a sorted Key and Value vector set to obtain the candidate Key and Value vector set.

According to yet another embodiment of the present disclosure, the object detection apparatus 400 may further include an evaluation vector supervision module (not shown in the figure) configured to: supervise the Key and Value vector evaluation graph using a classification loss function supervision signal based on binary cross-entropy.

According to yet another embodiment of the present disclosure, the second vector extraction module 403 may be further configured to: obtain a Query vector evaluation vector by introducing an additional model branch, and perform the second score evaluation on the pre-generated Query vector set using the Query vector evaluation vector; sort the Query vectors in the Query vector set from high score to low score based on the second score evaluation result; select the top second specified number of Query vectors from a sorted Query vector set to obtain the target Query vector set.

According to yet another embodiment of the present disclosure, the evaluation vector supervision module (not shown in the figure) may be further configured to: supervise the Query vector evaluation vector using a loss function based on mean absolute error.

According to yet another embodiment of the present disclosure, the additional model branch is implemented based on a convolutional neural network.

According to the technical solution of the embodiments of the present disclosure, performing feature extraction on an input image to obtain a feature matrix, and flattening the feature matrix in a planar dimension to obtain a Key and Value vector set; performing first score evaluation on the Key and Value vector set, and extracting a candidate Key and Value vector set from the Key and Value vector set based on a first score evaluation result; performing second score evaluation on a pre-generated Query vector set, and extracting a target Query vector set from the Query vector set based on a second score evaluation result; performing attention mechanism calculation based on the candidate Key and Value vector set and the target Query vector set to obtain an object detection result. By performing quality score evaluation on the QKV vectors of the attention mechanism and then selecting some QKV vectors carrying the most effective information, the amount of attention mechanism calculation is significantly reduced without decreasing the feature resolution or reducing effective features based on a dynamic screening strategy for the number of QKV vectors, thereby improving the calculation speed and achieving the effect of object detection in real time at the vehicle end.

FIG. 5 shows an exemplary system architecture 500 to which the object detection method or apparatus according to the embodiments of the present disclosure can be applied.

As shown in FIG. 5, the system architecture 500 may include terminal devices 501, 502, 503, a network 504, and a server 505. The network 504 serves as a medium for providing a medium for communication links between the terminal devices 501, 502, 503 and the server 505. The network 504 may include various connection types, such as wired, wireless communication links, or optical fiber cables, etc.

Users can use the terminal devices 501, 502, 503 to interact with the server 505 via the network 504 to receive or send messages, etc. Various communication client applications may be installed on the terminal devices 501, 502, 503, such as vehicle navigation applications, web browser applications, search applications, instant messaging tools, email clients, social platform software, etc. (examples only).

The terminal devices 501, 502, 503 may be various electronic devices with displays and supporting web browsing, including but not limited to smartphones, tablets, laptops, and desktop computers, etc.

The server 505 may be a server providing various services, such as a backend management server supporting the websites browsed by users using the terminal devices 501, 502, 503 (example only).

The backend management server can perform the following processing on received data such as target detection requests: performing feature extraction on an input image to obtain a feature matrix, and flattening the feature matrix in a planar dimension to obtain a Key and Value vector set; performing first score evaluation on the Key and Value vector set, and extracting a candidate Key and Value vector set from the Key and Value vector set based on a first score evaluation result; performing second score evaluation on a pre-generated Query vector set, and extracting a target Query vector set from the Query vector set based on a second score evaluation result; performing attention mechanism calculation based on the candidate Key and Value vector set and the target Query vector set to obtain an object detection result, and feed back the processing result (e.g., object detection result - example only) to the terminal devices.

It should be noted that the object detection method provided by the embodiments of the present disclosure is generally executed by the server 505, and correspondingly, the object detection apparatus is generally set up in the server 505.

It should be understood that the numbers of terminal devices, networks, and servers in FIG. 5 are merely illustrative. According to implementation needs, there can be any number of terminal devices, networks, and servers.

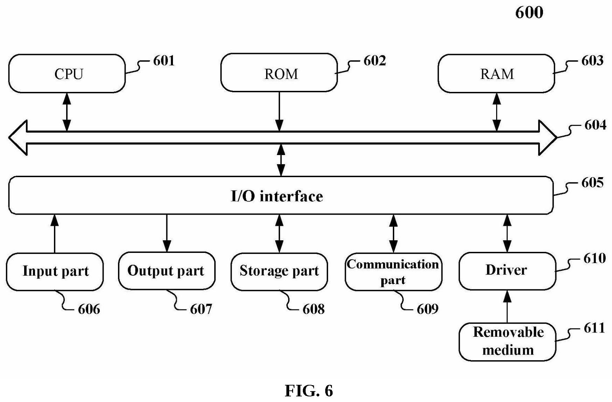

Referring to FIG. 6 below, it shows a schematic structural diagram of a computer system 600 suitable for implementing a terminal devices or servers according to embodiments of the present disclosure. The terminal device or server shown in FIG. 6 is only an example, and should not impose any limitation on the functionality and scope of use of the embodiments of the present disclosure.

As shown in FIG. 6, the computer system 600 includes a central processing unit (CPU) 601, which can perform various appropriate actions and processing according to programs stored in a read-only memory (ROM) 602 or programs loaded into a random access memory (RAM) 603 from a storage part 608. In the RAM 603, various programs and data required for the operation of the system 600 are also stored. The CPU 601, ROM 602, and RAM 603 are connected to each other via a bus 604. An input/output (I/O) interface 605 is also connected to the bus 604.

The following components are connected to the I/O interface 605: an input part 606 including a keyboard, a mouse, etc.; an output part 607 including a cathode ray tube (CRT), a liquid crystal display (LCD), and a speaker, etc.; a storage part 608 including a hard disk, etc.; and a communication part 609 including a network interface card such as a LAN card, a modem, etc. The communication part 609 performs communication processing via a network such as the Internet. A driver 610 is also connected to the I/O interface 605 as needed.

A removable medium 611, such as a magnetic disk, an optical disk, a magneto-optical disk, a semiconductor memory, etc., is installed on the drive 610 as needed, so that a computer program read therefrom is installed into the storage part 608 as needed.

In particular, according to the embodiments of the present disclosure, the processes described above with reference to the flowcharts can be implemented as computer software programs. For example, the embodiments of the present disclosure comprise a computer program product, which includes a computer program carried on a computer-readable medium, the computer program containing program code for executing the method shown in the flowchart. In such an embodiment, the computer program can be downloaded and installed from the network via the communication part 609, and/or installed from the removable medium 611. When the computer program is executed by the central processing unit (CPU) 601, the above-mentioned functions defined in the system of the present disclosure are performed.

It should be noted that the computer-readable medium shown in the present disclosure may be a computer-readable signal medium or a computer-readable storage medium, or any combination of the above two. A computer-readable storage medium may be, for example, but not limited to, an electrical, magnetic, optical, electromagnetic, infrared, or semiconductor system, apparatus, or device, or any combination of the above. More specific examples of the computer-readable storage medium may include, but are not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium may be any tangible medium that contains or stores a program, which can be used by or in combination with an instruction execution system, apparatus, or device. In the present disclosure, the computer-readable signal medium may include a data signal propagated in a baseband or as part of a carrier wave, carrying computer-readable program code. Such a propagated data signal may take various forms, including but not limited to electromagnetic signals, optical signals, or any suitable combination of the above. The computer-readable signal medium may also be any computer-readable medium other than a computer-readable storage medium, which can transmit, propagate, or transport a program for use by or in combination with an instruction execution system, apparatus, or device. The program code contained on a computer-readable medium can be transmitted by any suitable medium, including but not limited to: wireless, wire, optical cable, RF, etc., or any suitable combination of the above.

The flowcharts and block diagrams in the accompanying drawings illustrate the system architecture, functionality, and operation that may possibly be achieved by the system, method, and computer program product of various embodiments of the present disclosure. In this regard, each block in the flowcharts or block diagrams may represent a module, program segment, or part of code, and the module, program segment, or part of code comprises one or more executable instructions for implementing the specified logical function. It should also be noted that in some alternative implementations, the functions marked in the blocks may occur in a different order from that marked in the accompanying drawings. For example, two blocks shown in succession may, in fact, be executed substantially concurrently, or they may sometimes be executed in the reverse order, depending on the functions involved. It should also be noted that each block of the block diagrams or flowcharts, and combinations of blocks in the block diagrams or flowcharts, can be implemented by a dedicated hardware-based system that performs the specified functions or operations, or by a combination of dedicated hardware and computer instructions.

The units or modules involved in the embodiments of the present disclosure can be implemented in software or hardware. The described units or modules can also be provided in a processor. For example, a processor can be described as comprising an image feature extraction module, a first vector extraction module, a second vector extraction module, and an attention mechanism calculation module. The names of these units or modules do not constitute a limitation on the units or modules themselves in some cases. For example, the attention mechanism calculation module can also be described as "a module for performing attention mechanism calculation based on the candidate Key and Value vector set and the target Query vector set to obtain an object detection result."

As another aspect, the present disclosure also provides a computer-readable medium. The computer-readable medium may be included in the apparatus described in the above embodiments; or it may exist alone and not be assembled into the apparatus. The above-mentioned computer-readable medium carries one or more programs. When the one or more programs are executed by the apparatus, the apparatus is caused to: perform feature extraction on an input image to obtain a feature matrix, and flatten the feature matrix in a planar dimension to obtain a Key and Value vector set; perform first score evaluation on the Key and Value vector set and extract a candidate Key and Value vector set from the Key and Value vector set based on a first score evaluation result; perform second score evaluation on a pre-generated Query vector set and extract a target Query vector set from the Query vector set based on a second score evaluation result; perform attention mechanism calculation based on the candidate Key and Value vector set and the target Query vector set to obtain an object detection result.

According to the technical solution of the embodiments of the present disclosure, feature extraction is performed on an input image to obtain a feature matrix, and the feature matrix is flattened in a planar dimension to obtain a Key and Value vector set; first score evaluation is performed on the Key and Value vector set, and a candidate Key and Value vector set is extracted from the Key and Value vector set based on the first score evaluation result; second score evaluation is performed on a pre-generated Query vector set and a target Query vector set is extracted from the Query vector set based on the second score evaluation result; attention mechanism calculation is performed based on the candidate Key and Value vector set and the target Query vector set to obtain an object detection result. By performing quality score evaluation on the QKV vectors of the attention mechanism and then selecting some QKV vectors carrying the most effective information, the amount of attention mechanism calculation is significantly reduced based on a dynamic screening strategy for the number of QKV without reducing feature resolution or effective features, thereby achieving the effect of object detection in real time at the vehicle end.

The above specific implementations do not constitute a limitation on the scope of protection of the present disclosure. Those of ordinary skill in the art should understand that various modifications, combinations, sub-combinations, and substitutions can be made according to design requirements and other factors. Any modifications, equivalent substitutions, and improvements made within the spirit and principles of the present disclosure should be included within the scope of protection of the present disclosure.

## Claims

1. An object detection method, comprising:
performing feature extraction on an input image to obtain a feature matrix, and flattening the feature matrix in a planar dimension to obtain a Key and Value vector set;
performing first score evaluation on the Key and Value vector set, and extracting a candidate Key and Value vector set from the Key and Value vector set based on a first score evaluation result;
performing second score evaluation on a pre-generated Query vector set, and extracting a target Query vector set from the Query vector set based on a second score evaluation result;
performing attention mechanism calculation based on the candidate Key and Value vector set and the target Query vector set to obtain an object detection result.

2. The method according to claim 1, wherein performing first score evaluation on the Key and Value vector set and extracting the candidate Key and Value vector set from the Key and Value vector set based on the first score evaluation result comprises:
obtaining a Key and Value vector evaluation graph by introducing an additional model branch, and performing the first score evaluation on the Key and Value vector set using the Key and Value vector evaluation graph;
sorting the Key and Value vectors in the Key and Value vector set from high score to low score based on the first score evaluation result;
selecting the top first specified number of Key and Value vectors from a sorted Key and Value vector set to obtain the candidate Key and Value vector set.

3. The method according to claim 2, further comprising:
supervising the Key and Value vector evaluation graph using a classification loss function supervision signal based on binary cross-entropy.

4. The method according to claim 1, wherein performing second score evaluation on the pre-generated Query vector set and extracting the target Query vector set from the Query vector set based on the second score evaluation result comprises:
obtaining a Query vector evaluation vector by introducing an additional model branch, and performing the second score evaluation on the pre-generated Query vector set using the Query vector evaluation vector;
sorting the Query vectors in the Query vector set from high score to low score based on the second score evaluation result;
selecting the top second specified number of Query vectors from a sorted Query vector set to obtain the target Query vector set.

5. The method according to claim 4, further comprising:
supervising the Query vector evaluation vector using a loss function based on mean absolute error.

6. The method according to claim 2 or 4, wherein the additional model branch is implemented based on a convolutional neural network.

7. An object detection apparatus, comprising:
an image feature extraction module, configured to perform feature extraction on an input image to obtain a feature matrix, and flatten the feature matrix in a planar dimension to obtain a Key and Value vector set;
a first vector extraction module, configured to perform first score evaluation on the Key and Value vector set, and extract a candidate Key and Value vector set from the Key and Value vector set based on a first score evaluation result;
a second vector extraction module, configured to perform second score evaluation on a pre-generated Query vector set, and extract a target Query vector set from the Query vector set based on a second score evaluation result;
an attention mechanism calculation module, configured to perform attention mechanism calculation based on the candidate Key and Value vector set and the target Query vector set to obtain an object detection result.

8. The apparatus according to claim 7, wherein the first vector extraction module is further configured to:
obtain a Key and Value vector evaluation graph by introducing an additional model branch, and perform first score evaluation on the Key and Value vector set using the Key and Value vector evaluation graph;
sort the Key and Value vectors in the Key and Value vector set from high score to low score based on the first score evaluation result;
select the top first specified number of Key and Value vectors from a sorted Key and Value vector set to obtain the candidate Key and Value vector set.

9. The apparatus according to claim 7, wherein the second vector extraction module is further configured to:
obtain a Query vector evaluation vector by introducing an additional model branch, and perform second score evaluation on the pre-generated Query vector set using the Query vector evaluation vector;
sort the Query vectors in the Query vector set from high score to low score based on the second score evaluation result;
select the top second specified number of Query vectors from a sorted Query vector set to obtain the target Query vector set.

10. An electronic device, comprising:
one or more processors;
a storage device configured to store one or more programs,
the one or more programs, which when executed by the one or more processors, cause the one or more processors to perform the method according to any one of claims 1-6.

11. A computer-readable medium, on which a computer program is stored, which when executed by a processor, causes the processor to perform the method according any one of claims 1-6.
